# EUROPÄISCHE PATENTSCHRIFT

(11) **EP 1 055 983 B1**
(45) Veröffentlichungstag und Bekanntmachung des Hinweises auf die Patenterteilung: **03.08.2005**
(21) Anmeldenummer: 00108701.4
(22) Anmeldetag: 22.04.2000
(51) Int. Cl.: G05B 19/042

(54) **Steuergerät mit mindestens zwei Steuereinheiten, davon eine mit externer Schnittstelle**
Control device with at least two control units, one of them with an external interface
Contrôleur pour au moins deux unités de contrôle, dont une avec interface externe

(30) Priorität: 25.05.1999 DE 19923879
(43) Veröffentlichungstag der Anmeldung: 29.11.2000
(73) Patentinhaber: ROBERT BOSCH GMBH, 70442 Stuttgart (DE)
(72) Erfinder: Kohler, Rolf, 71701 Schwieberdingen (DE); Braun, Guenter, 74321 Bietigheim (DE); Jautelat, Rüdiger, 74321 Bietigheim-Bissingen (DE); Gieseler, Steffen, 71739 Oberriexingen (DE)

(56) Entgegenhaltungen:
- WO-A-91/10201
- DE-A- 19 616 166
- US-A- 4 381 543

## Beschreibung

### Stand der Technik

Die vorliegende Erfindung betrifft ein Steuergerät mit mindestens zwei Steuereinheiten und mindestens einer programmierbaren Speichereinrichtung, wobei in der oder jeder Speichereinrichtung Programme und Daten für die Steuereinheiten speicherbar sind und eine der Steuereinheiten eine Schnittstelle aufweist, über die von einer externen Quelle in das Steuergerät einzuspeichernde Programme und Daten zu dieser Steuereinheit übertragbar sind. Die Erfindung betrifft auch ein Verfahren zum Programmieren eines Steuergeräts mit mindestens zwei Steuereinheiten und mindestens einer programmierbaren Speichereinrichtung, wobei in der oder jeder Speichereinrichtung Programme und Daten für die Steuereinheiten gespeichert werden und in das Steuergerät einzuspeichernde Programme und Daten über eine Schnittstelle einer der Steuereinheiten von einer externen Quelle zu dieser Steuereinheit übertragen werden.

Ein Steuergerät der eingangs genannten Art ist bspw. aus der DE 196 16 166 A1 bekannt. Dort wird ein Steuergerät mit einer ersten und einer zweiten Steuereinheit offenbart. Jeder der Steuereinheiten ist eine programmierbare Speichereinrichtung zugeordnet. Die erste Steuereinheit ist über eine erste Schnittstelle mit einer externen Quelle verbunden. Von der Quelle können in das Steuergerät einzuspeichernde Programme und Daten über die erste Schnittstelle zu der ersten Steuereinheit übertragen werden. Die übertragenen Programme und Daten werden von der ersten Steuereinheit in die ihr zugeordnete erste Speichereinrichtung eingespeichert. Um die Programmierung von mehreren programmierbaren Speichereinrichtungen einfach und fehlerunanfällig durchführen zu können, wird in der DE 196 16 166 A1 vorgeschlagen, die zweite Steuereinheit über eine zweite Schnittstelle mit der ersten Steuereinheit zu verbinden. Die erste Steuereinheit kann dann von der externen Quelle empfangene Programme und Daten wahlweise in der ersten Speichereinrichtung ablegen oder aber über die zweite Schnittstelle an die zweite Steuereinheit weiterleiten, die die Programme und Daten dann in der ihr zugeordneten zweiten Speichereinrichtung ablegt.

Da dieses bekannte Steuergerät nicht für jede seiner Steuereinheiten eine gesonderte Schnittstelle zu der externen Quelle aufweist, sondern nur eine Schnittstelle zur Verbindung der externen Quelle mit beiden Steuereinheiten aufweist, kann die Programmierung der Speichereinrichtungen des Steuergeräts einfach und fehlerunanfällig durchgeführt werden. Eine Fehlprogrammierung des Steuergeräts hervorgerufen durch ein verkehrtes Anschließen der externen Quelle an die Schnittstellen der einzelnen Steuereinheiten kann bei diesem bekannten Steuergerät ausgeschlossen werden, da es nur eine Schnittstelle aufweist, an die die externe Quelle angeschlossen werden kann.

Das bekannte Steuergerät hat jedoch den Nachteil, dass die Programmierung des Steuergeräts eine relativ lange Zeit in Anspruch nimmt, da die beiden Steuereinheiten mit unterschiedlichen Programmen und/oder Daten arbeiten, die alle über die erste Schnittstelle von der externen Quelle an die Speichereinrichtungen der ersten und der zweiten Steuereinheit übertragen werden müssen.

Dazu zeigt die WO 91/10201 ein prozessorgesteuertes Steuerungssystem mit einer Anzahl von Mikroprozessor-Steuerungseinheiten, die funktionale Operationen durchführen und über eine Kommunikationsverbindung miteinander kommunizieren, wobei jede Mikroprozessor-Steuerungseinheit einen Programmspeicher hat, der dazu programmiert ist, eine zugeordnete Einrichtung zu betreiben, die wenigstens eine der funktionalen Operationen ausführt. Dabei wird allen Steuerungseinheiten über ein Terminal ein einheitlicher Parametersatz zugeführt, der in allen Steuerungseinheiten erhalten bleibt und verwendet wird. Erhält eine Steuerungseinheit ein Parameter-update so wird dieses den übrigen Steuerungseinheiten über die Kommunikationsverbuindung weitergeleitet, so dass immer in allen Steuerungseinheiten der exakt gleiche Parametersatz Verwendung findet.

Der vorliegenden Erfindung liegt die Aufgabe zu Grunde, ein Steuergerät der eingangs genannten Art dahingehend auszugestalten und weiterzubilden, dass die Programmierung der oder jeder Speichereinrichtung einfach und schnell durchführbar ist und trotzdem eine gewisse Flexibilität erreicht wird.

Zur Lösung dieser Aufgabe schlägt die Erfindung ausgehend von dem Steuergerät der eingangs genannten Art vor, dass die Steuereinheit die über die Schnittstelle empfangenen Programme und Daten in der oder jeder Speichereinrichtung derart ablegt, dass die Programme und Daten für alle Steuereinheiten des Steuergeräts zugreifbar sind, wobei solche Programmteile, die nicht von allen Steuereinheiten abgearbeitet werden mit einer Kodierung versehen werden, aus der sich die Steuereinheiten ergeben, die diese Programmteile abarbeiten.

Bei dem erfindungsgemässen Steuergerät werden die in der oder jeder Speichereinrichtung abgelegten Programme und Daten zumindest teilweise von mehreren Steuereinheiten des Steuergeräts abgearbeitet. Vorzugsweise werden die Programme und Daten von allen Steuereinheiten des Steuergeräts abgearbeitet. Jeder abgearbeitete Befehl der Programme wird erst dann quittiert, wenn ihn sämtliche Steuereinheiten, die dieses Programm abarbeiten sollen, auch tatsächlich ausgeführt haben.

Das erfindungsgemässe Steuergerät hat den Vorteil, dass die Programme und Daten nur einmal für sämtliche Steuereinheiten des Steuergeräts und nicht für jede Steuereinheit einzeln an das Steuergerät übertragen werden müssen. Dadurch kann bei der Programmierung oder der Umprogrammierung der Steuereinheiten eines Steuergeräts in erheblichem Masse Zeit eingespart werden. Gegenüber den bekannten Steuergeräten mit mehreren Steuereinheiten, bei denen jede der Steuereinheiten eine Schnittstelle zu der externen Quelle aufweist, hat das erfindungsgemässe Steuergerät den Vorteil, dass mit Sicherheit dieselben Programme und Daten in der oder jeder Speichereinrichtung abgelegt sind, so dass die Steuereinheiten des Steuergeräts auch tatsächlich auf dieselben Programme und Daten zugreifen.

Mehrere Steuereinheiten, vorzugsweise alle Steuereinheiten, des erfindungsgemäßen Steuergeräts arbeiten dieselben Programme und Daten ab. Es ist jedoch auch denkbar, daß die oder jede Speichereinrichtung Programmteile mit unterschiedlichen Funktionen für einzelne Steuereinheiten enthält. Solche Programmteile, die nicht von allen Steuereinheiten abgearbeitet werden, können mit einer Kodierung versehen werden, aus der sich die Steuereinheiten ergeben, die diese Programmteile abarbeiten. D. h. sämtliche Steuereinheiten des Steuergeräts haben Zugriff auf dieselben Programme (und Programmteile) und Daten, die in der oder jeder Speichereinrichtung abgelegt sind. Bestimmte Programmteile werden jedoch nur von ausgewählten Steuereinheiten ausgeführt.

Auf eine zeitaufwendige Übertragung unterschiedlicher Programme und Daten für die einzelnen Steuereinheiten des Steuergeräts kann bei dem erfindungsgemäßen Steuergerät verzichtet werden. Vielmehr werden für sämtliche Steuereinheiten einheitliche Programme und Daten nur einmal an das Steuergerät übertragen. Die Verteilung der empfangenen Programme und Daten auf die oder jede Speichereinrichtung erfolgt intern in dem Steuergerät durch diejenige Steuereinheit, die über die Schnittstelle mit der externen Quelle verbunden ist.

Während der Abarbeitung der Programme und Daten eventuell auftretende Fehlermeldungen haben eine Kennung, die eine Identifikation der betroffenen Steuereinheit ermöglicht. Dadurch kann die Suche nach der Ursache eines aufgetretenen Fehlers sofort auf eine bestimmte Steuereinheit begrenzt werden. Eine solche Fehlermeldung mit Kennung empfiehlt sich insbesondere in der Entwicklungsphase des Steuergeräts, der Steuereinheiten oder der Programme für das Steuergerät.

Gemäß einer vorteilhaften Weiterbildung der Erfindung wird vorgeschlagen, dass das Steuergerät zwei Steuereinheiten und zwei jeweils einer Steuereinheit zugeordnete Speichereinrichtungen aufweist. Steuergeräte mit zwei Steuereinheiten dienen bspw. zur Steuerung einer Verbrennungskraftmaschine mit einer hohen Zylinderzahl (z.B. 12 Zylindern). Bei solchen Verbrennungskraftmaschinen werden nicht alle Zylinder von einer Steuereinheit, sondern bspw. die Zylinder der einen Zylinderreihe von der ersten Steuereinheit und die Zylinder der anderen Zylinderreihe durch die zweite Steuereinheit gesteuert. Die von der einen Steuereinheit über die Schnittstelle von der externen Quelle empfangenen Programme und Daten werden von dieser Steuereinheit in die ihr zugeordnete Speichereinrichtung weitergeleitet und dort abgelegt. Ebenso werden die empfangenen Programme und Daten an die zweite Steuereinheit und an die ihr zugeordnete zweite Speichereinrichtung weitergeleitet und dort ebenfalls abgelegt. Bei der Abarbeitung der Programme und Daten durch die beiden Steuereinheiten greifen diese auf dieselben Programme und Daten zu, die in den beiden jeweils einer Steuereinheit zugeordneten Speichereinrichtungen abgelegt sind.

Gemäß einer bevorzugten Ausführungsform der Erfindung wird vorgeschlagen, dass das Steuergerät zwei Steuereinheiten und eine den beiden Steuereinheiten zugeordnete Speichereinrichtung aufweist. Diese Ausführungsform hat den Vorteil, dass die von der externen Quelle über die Schnittstelle an die eine Steuereinheit übertragenen Programme und Daten lediglich in der einen Speichereinrichtung abgelegt werden müssen. Diese eine Speichereinrichtung ist beiden Steuereinheiten zugeordnet, d. h. beide Steuereinheiten können auf die Programme und Daten in der Speichereinrichtung zugreifen. Auf eine interne Weiterleitung der empfangenen Programme und Daten durch diejenige Steuereinheit, die über die Schnittstelle mit der externen Quelle verbunden ist, an mehrere Speichereinrichtungen kann verzichtet werden.

Vorteilhafterweise ist die oder jede Speichereinrichtung als ein Speicher mit wahlfreiem Zugriff auf die gespeicherten Programme und Daten durch die Steuereinheiten, insbesondere als ein Dual-Port-RAM, ausgebildet. Eine derart ausgebildete Speichereinrichtung dient der schnellen parallelen Übertragung der Daten und Programme während der Programmierung und des Betriebes.

Das Steuergerät kann überall dort eingesetzt werden, wo es erforderlich ist, Speichereinrichtungen, die mehreren Steuereinheiten eines Steuergerätes zugeordnet sind, durch eine externe Quelle innerhalb möglichst kurzer Zeit zu programmieren bzw. umzuprogrammieren. Vorzugsweise ist das Steuergerät als ein Kraftfahrzeugsteuergerät, insbesondere zur Steuerung von Verbrennungskraftmaschinen, ausgebildet. Das Kraftfahrzeugsteuergerät kann jedoch auch das Getriebe oder die Bremsen eines Kraftfahrzeugs steuern.

Es ist eine weitere Aufgabe der vorliegenden Erfindung, ein Verfahren der eingangs genannten Art dahingehend auszugestalten und weiterzubilden, dass das Steuergerät möglichst einfach und schnell programmiert werden kann.

Zur Lösung dieser Aufgabe schlägt die Erfindung ausgehend von dem Verfahren der eingangs genannten Art vor, dass die über die Schnittstelle empfangenen Programme und Daten von der Steuereinheit in der oder jeder Speichereinrichtung derart abgelegt werden, dass alle Steuereinheiten des Steuergeräts auf die Programme und Daten zugreifen können.

Nach dem erfindungsgemäßen Verfahren müssen die Programme und Daten lediglich einmal von der externen Quelle zu dem Steuergerät übertragen werden. Diejenige Steuereinheit, die über die Schnittstelle mit der externen Quelle verbunden ist, leitet die empfangenen Programme und Daten dann intern in dem Steuergerät an die oder jede Speichereinrichtung weiter. Die Programme und Daten sind derart in der oder jeder Speichereinrichtung abgelegt, dass alle Steuereinheiten auf die Programme und Daten zugreifen können und somit dieselben Programme und Daten abarbeiten.

Zum Programmieren eines Steuergeräts, das zwei Steuereinheiten und zwei jeweils einer Steuereinheit zugeordnete Speichereinrichtungen aufweist, wird gemäß einer vorteilhaften Weiterbildung der Erfindung vorgeschlagen, dass in jeder Speichereinrichtung dieselben Programme und Daten abgelegt werden.

Zum Programmieren eines Steuergeräts, das zwei Steuereinheiten und eine den beiden Steuereinheiten zugeordnete Speichereinrichtung aufweist, wird gemäß einer bevorzugten Ausführungsform der Erfindung vorgeschlagen, dass beide Steuereinheiten auf dieselbe Speichereinrichtung mit denselben Programmen und Daten zugreifen können.

Zwei bevorzugte Ausführungsbeispiele der Erfindung werden im Folgenden anhand der Zeichnungen näher erläutert. Es zeigen:
- Figur 1: ein erfindungsgemäßes Steuergerät gemäß einer ersten bevorzugten Ausführungsform; und
- Figur 2: ein erfindungsgemäßes Steuergerät gemäß einer zweiten bevorzugten Ausführungsform.

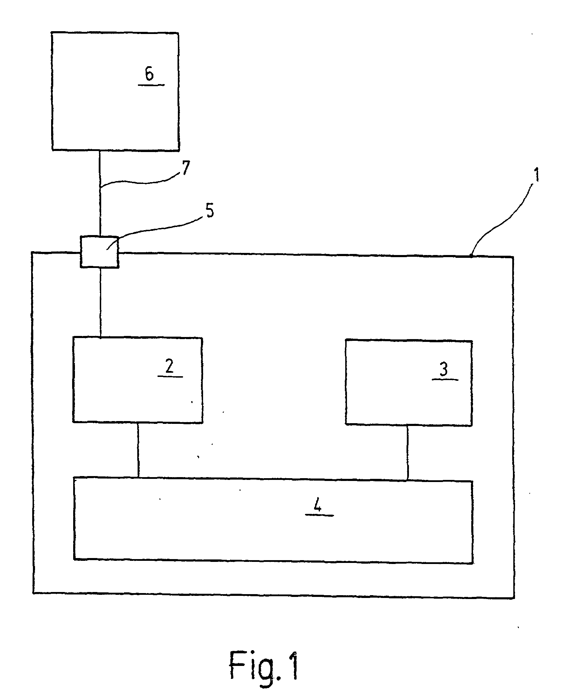

In Figur 1 ist ein erfindungsgemäßes Steuergerät gemäß einer bevorzugten Ausführungsform in seiner Gesamtheit mit dem Bezugszeichen 1 gekennzeichnet. Das Steuergerät 1 ist als ein Kraftfahrzeugsteuergerät ausgebildet, das zur Steuerung der Verbrennungskraftmaschine, des Getriebes oder der Bremsen eines Kraftfahrzeuges (nicht dargestellt) dient. Das Steuergerät 1 weist eine erste Steuereinheit 2, eine zweite Steuereinheit 3 und eine Speichereinrichtung 4 auf. Die Steuereinheiten 2, 3 sind bspw. als Mikroprozessoren oder als Mikrocontroller ausgebildet. Die erste Steuereinheit 2 ist über eine Schnittstelle 5 mit einer externen Quelle 6 verbunden. Die externe Quelle 6 ist als eine Programmiervorrichtung, insbesondere als ein Personalcomputer, ausgebildet. Von der externen Quelle 6 werden Programme und Daten über die Schnittstelle 5 an die Steuereinheit 2 übertragen. Die Programme und Daten werden über eine Schnittstellenleitung 7 von der externen Quelle 6 an die Schnittstelle 5 geleitet. Die Schnittstellenleitung 7 kann bspw. als eine sog. K-Leitung ausgebildet sein, die international normiert (ISO-Norm) ist und insbesondere im Kraftfahrzeugbereich eingesetzt wird.

Die erste Steuereinheit 2 leitet die empfangenen Programme und Daten an die Speichereinrichtung 4 weiter, wo sie derart abgelegt werden, dass die Programme und_Daten für beide Steuereinheiten 2, 3 des Steuergeräts 1 zugreifbar sind. Beide Steuereinheiten 2, 3 arbeiten somit dieselben Programme und Daten ab. Bei dem erfindungsgemäßen Steuergerät 1 kann auf eine zeitaufwendige Übertragung einer Vielzahl unterschiedlicher Programme und Daten für die einzelnen Steuereinheiten 2; 3 von der externen Quelle 6 über die Schnittstellenleitung 7 und die Schnittstelle 5 verzichtet werden. Da beide Steuergeräte 2, 3 auf dieselbe Speichereinrichtung 4 zugreifen können, genügt es, wenn für die Steuereinheiten 2, 3 einheitliche Programme und Daten lediglich einmal an das Steuergerät 1 übertragen werden.

Die Speichereinrichtung 4 ist als ein Speicher mit wahlfreiem Zugriff auf die gespeicherten Programme und Daten durch beide Steuereinheiten 2, 3 ausgebildet. Ein derartiger Speicher wird bspw. als Dual-Port-RAM bezeichnet.

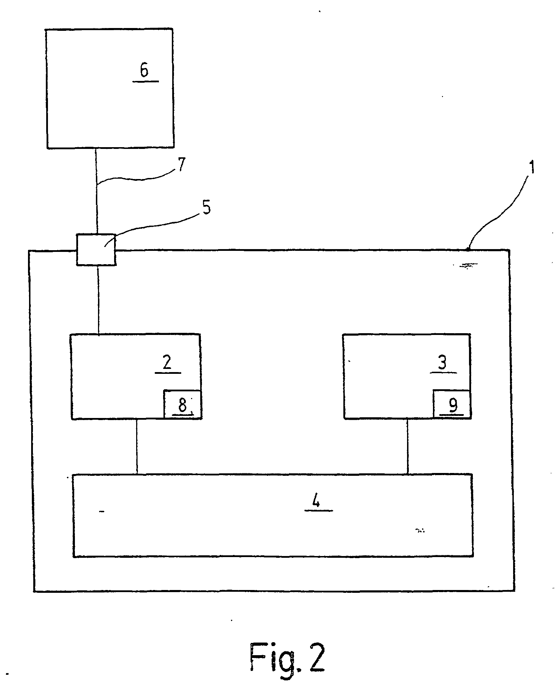

Abweichend von der in Figur 1 dargestellten Ausführungsform des Steuergeräts 1 kann jeder Steuereinheit 2, 3 eine eigene Speichereinrichtung 8, 9 zugeordnet sein, die als lokale Speicher bezeichnet werden (vgl. Figur 2). In diesem Fall legen die Steuereinheit 2, 3 während des Programmiervorgangs in den ihnen zugeordneten Speichereinrichtugen 8, 9 eine während dieses Programmiervorgangs nicht löschbare Kopie der übertragenen Programme und Daten ab. In beiden Speichereinrichtungen 8, 9 werden somit dieselben Programme und Daten abgelegt. Die Steuereinheiten 2, 3 greifen auf die Programme und Daten in derjenigen Speichereinrichtung 8; 9 zu, die ihnen jeweils zugeordnet ist. Die Speichereinrichtungen 8, 9 sind in Form löschbarer nicht flüchtiger Speicher realisiert. Derartige Speicher werden bspw. als Flash-EPROM bezeichnet, das die Vorzüge eines normalen EPROM (hoher Speicherzellendichte auf engem Raum) und die Vorteile eines EEPROM (elektrisches und damit einfaches und bequemes Löschen des Speicherinhalts) vereint.

## Patentansprüche

1. Steuergerät (1) mit mindestens zwei Steuereinheiten (2, 3) und mindestens einer programmierbaren Speichereinrichtung (4), wobei in der oder jeder Speichereinrichtung (4) Programme und Daten für die Steuereinheiten (2, 3) speicherbar sind und eine der Steuereinheiten (2) eine Schnittstelle (5) aufweist, über die von einer externen Quelle (6) in das Steuergerät (1) einzuspeichernde Programme und Daten zu dieser Steuereinheit (2) übertragbar sind, wobei die Steuereinheit (2) die über die Schnittstelle (5) empfangenen Programme und Daten in der oder jeder Speichereinrichtung (4) derart ablegt, dass die Programme und Daten für alle Steuereinheiten (2, 3) des Steuergeräts (1) zugreifbar sind, **dadurch gekennzeichnet, dass** solche Programmteile, die nicht von allen Steuereinheiten abgearbeitet werden mit einer Kodierung versehen werden, aus der sich die Steuereinheiten ergeben, die diese Programmteile abarbeiten.

2. Steuergerät (1) nach Anspruch 1, **dadurch gekennzeichnet, dass** das Steuergerät (1) zwei Steuereinheiten (2, 3) und zwei jeweils einer Steuereinheit (2; 3) zugeordnete Speichereinrichtungen (8, 9) aufweist.

3. Steuergerät (1) nach Anspruch 1 oder 2, **dadurch gekennzeichnet, dass** das Steuergerät (1) zwei Steuereinheiten (2, 3) und eine den beiden Steuereinheiten (2, 3) zugeordnete Speichereinrichtung (4) aufweist.

4. Steuergerät (1) nach einem der Ansprüche 1 bis 3, **dadurch gekennzeichnet, dass** die oder jede Speichereinrichtung (4) als ein Speicher mit wahlfreiem Zugriff auf die gespeicherten Programme und Daten durch die Steuereinheiten (2, 3), insbesondere als ein Dual-Port-RAM, ausgebildet ist.

5. Steuergerät (1) nach einem der Ansprüche 1 bis 4, **dadurch gekennzeichnet, dass** das Steuergerät (1) als ein Kraftfahrzeugsteuergerät, insbesondere zur Steuerung von Verbrennungskraftmaschinen, ausgebildet ist.

6. Verfahren zum Programmieren eines Steuergeräts (1) mit mindestens zwei Steuereinheiten (2, 3) und mindestens einer programmierbaren Speichereinrichtung (4), wobei in der oder jeder Speichereinrichtung (4) Programme und Daten für die Steuereinheiten (2, 3) gespeichert werden und in das Steuergerät (1) einzuspeichernde Programme und Daten über eine Schnittstelle (5) einer der Steuereinheiten (2) von einer externen Quelle (6) zu dieser Steuereinheit (2) übertragen werden, wobei die über die Schnittstelle (5) empfangenen Programme und Daten von der Steuereinheit (2) in der oder jeder Speichereinrichtung (4) derart abgelegt werden, dass alle Steuereinheiten (2, 3) des Steuergeräts (1) auf die Programme und Daten zugreifen können, **dadurch gekennzeichnet, dass** solche Programmteile, die nicht von allen Steuereinheiten abgearbeitet werden mit einer Kodierung versehen werden, aus der sich die Steuereinheiten ergeben, die diese Programmteile abarbeiten..

7. Verfahren nach Anspruch 6, zum Programmieren eines Steuergeräts (1), das zwei Steuereinheiten (2, 3) und zwei jeweils einer Steuereinheit (2; 3) zugeordnete Speichereinrichtungen (8; 9) aufweist, **dadurch gekennzeichnet, dass** in jeder Speichereinrichtung (8; 9) dieselben Programme und Daten abgelegt werden.

8. Verfahren nach Anspruch 6 oder 7, zum Programmieren eines Steuergeräts (1), das zwei Steuereinheiten (2, 3) und eine den beiden Steuereinheiten (2, 3) zugeordnete Speichereinrichtung (4) aufweist, **dadurch gekennzeichnet, dass** beide Steuereinheiten (2, 3) auf dieselbe Speichereinrichtung (4) mit denselben Programmen und Daten zugreifen können.

9. Verfahren nach Anspruch 6, **dadurch gekennzeichnet, dass** jeder abgearbeitete Befehl der Programme erst dann quittiert wird, wenn ihn sämtliche Steuereinheiten, die dieses Programm abarbeiten sollen auch tatsächlich ausgeführt haben.

10. Verfahren nach Anspruch 6, **dadurch gekennzeichnet**, das während der Abarbeitung der Programme und Daten eventuell auftretende Fehlermeldungen eine Kennung haben, die eine Identifikation der betroffenen Steuereinheit ermöglicht.

## Claims

1. Controller (1) having at least two control units (2, 3) and at least one programmable memory device (4), where the or each memory device (4) is able to store programs and data for the control units (2, 3), and one of the control units (2) has an interface (5) which can be used to transmit programs and data to be stored in the controller (1) to this control unit (2) from an external source (6), the control unit (2) storing the programs and data received via the interface (5) in the or each memory device (4) such that the programs and data can be accessed by all control units (2, 3) in the controller (1), **characterized in that** such program parts as are not executed by all control units are provided with a coding which reveals the control units which execute these program parts.

2. Controller (1) according to Claim 1, **characterized in that** the controller (1) has two control units (2, 3) and two memory devices (8, 9) associated with a respective control unit (2; 3).

3. Controller (1) according to Claim 1 or 2, **characterized in that** the controller (1) has two control units (2, 3) and a memory device (4) associated with the two control units (2, 3).

4. Controller (1) according to one of Claims 1 to 3, **characterized in that** the or each memory device (4) is in the form of a memory with random access to the stored programs and data through the control units (2, 3), particularly in the form of a dual-port RAM.

5. Controller (1) according to one of Claims 1 to 4, **characterized in that** the controller (1) is in the form of a motor vehicle controller, particularly for controlling internal combustion engines.

6. Method for programming a controller (1) having at least two control units (2, 3) and at least one programmable memory device (4), where the or each memory device (4) is used to store programs and data for the control units (2, 3), and programs and data to be stored in the controller (1) are transmitted via an interface (5) in one of the control units (2) to this control unit (2) from an external source (6), the programs and data received via the interface (5) being stored in the or each memory device (4) by the control unit (2) such that all control units (2, 3) in the controller (1) are able to access the programs and data, **characterized in that** such program parts as are not executed by all control units are provided with a coding which reveals the control units which execute these program parts.

7. Method according to Claim 6, for programming a controller (1) which has two control units (2, 3) and two memory devices (8; 9) associated with a respective control unit (2; 3), **characterized in that** each memory device (8; 9) is used to store the same programs and data.

8. Method according to Claim 6 or 7 for programming a control unit (1) which has two control units (2, 3) and a memory device (4) associated with the two control units (2, 3), **characterized in that** the two control units (2, 3) can access the same memory device (4) with the same programs and data.

9. Method according to Claim 6, **characterized in that** each executed instruction in the programs is not acknowledged until all control units which are intended to execute this program have actually executed said instruction.

10. Method according to Claim 6, **characterized in that** during the execution of the programs and data any error messages which arise have an identifier which allows the control unit in question to be identified.

## Revendications

1. Dispositif de commande (1) pour au moins deux unités de commande (2, 3) et au moins un dispositif de mémorisation (4) programmable, dans lequel ou dans chacun desquels (4) peuvent être stockés des programmes et des données pour les unités de commande (2, 3) dont l'une (2) présente une interface (5) par laquelle peuvent être transmis à cette unité de commande (2) les programmes et données qui proviennent d'une source externe (6) et qui doivent être mémorisés dans le dispositif de commande (1), l'unité de commande (2) déposant ces programmes et données reçus par l'intermédiaire de l'interface (5) dans le ou dans chacun des dispositifs de mémorisation (4), de sorte que les programmes et données sont accessibles à toutes les unités de commande (2, 3) du dispositif de commande (1),
**caractérisé en ce que**
les parties de programme qui ne sont pas utilisées par toutes les unités de commande sont dotées d'un codage qui définit les unités de commande qui utilisent ces parties de programme.

2. Dispositif de commande (1) selon la revendication 1,
**caractérisé en ce qu'**
il comporte deux unités de commande (2, 3) et deux dispositifs de mémorisation (8, 9) affectés chacun à une unité de commande (2, 3).

3. Dispositif de commande (1) selon la revendication 1 ou 2,
**caractérisé en ce qu'**
il comporte deux unités de commande (2, 3) et un dispositif de mémorisation (4) affecté aux deux unités de commande (2, 3).

4. Dispositif de commande (1) selon une des revendications 1 à 3,
**caractérisé en ce que**
le ou chaque dispositif de mémorisation (4) est constitué sous la forme d'une mémoire avec accès facultatif aux programmes et données mémorisés par les unités de contrôle (2, 3), en particulier sous la forme d'un Dual-Port-RAM.

5. Dispositif de commande (1) selon une des revendications 1 à 4,
**caractérisé en ce que**
le dispositif de commande (1) est celui d'un véhicule automobile servant notamment à commander un moteur à combustion interne.

6. Procédé pour programmer un dispositif (1) présentant au moins deux unités de commande (2, 3) et au moins un dispositif de mémorisation (4) programmable, dans lequel ou dans chacun desquels sont stockés des programmes et des données pour les unités de commande (2, 3), les programmes et données qui proviennent d'une source externe (6) et qui doivent être mémorisés dans le dispositif (1), étant transmis d'une source externe à une des unités de commande (2) par l'intermédiaire d'une interface (5) de cette unité (2), et ces programmes et données reçus par l'unité de commande (2), par l'intermédiaire de l'interface (5) sont déposés dans le ou dans chacun des dispositifs de mémorisation (4), de sorte que toutes les unités de commande (2 ; 3) du dispositif (1) peuvent accéder aux programmes et aux données,
**caractérisé en ce que**
les parties de programme qui ne sont pas utilisées par toutes les unités de commande sont dotées d'un codage qui définit les unités de commande qui utilisent ces parties de programme.

7. Procédé selon la revendication 6, pour programmer un dispositif (1) qui présente deux unités de commande (2, 3) et deux dispositifs de mémorisation (8 ; 9) affectés chacun à une unité de commande (2 ; 3),
**caractérisé en ce que**
dans chaque unité de mémorisation (8 ; 9) sont déposés les mêmes programmes et les mêmes données.

8. Procédé selon la revendication 6 ou 7, pour programmer un dispositif (1) qui présente deux unités de commande (2 ; 3) et un dispositif de mémorisation (4) associé à une des deux unités de commande (2 ; 3),
**caractérisé en ce que**
les deux unités de commande (2 ; 3) peuvent accéder au même dispositif de mémorisation (4) avec les mêmes programmes et les mêmes données.

9. Procédé selon la revendication 6,
**caractérisé en ce que**
pour chaque instruction des programmes, l'accusé de réception est donné seulement quand toutes les unités de commande qui doivent utiliser ce programme ont effectivement exécuté cette instruction.

10. Procédé selon la revendication 6,
**caractérisé en ce que**
pendant l'utilisation des programmes et des données, des informations erronées se produisant éventuellement ont une caractéristique permettant l'identification de l'unité de commande concernée.
